Europäisches Patentamt

European Patent Office

Office européen des brevets

(11) Publication number : **0 468 706 A2**

# EUROPEAN PATENT APPLICATION

(21) Application number : **91306561.1**

(22) Date of filing : **18.07.91**

(51) Int. Cl.⁵ : **F03H 1/00**

(30) Priority : **27.07.90 GB 9016567**

(43) Date of publication of application :
**29.01.92 Bulletin 92/05**

(84) Designated Contracting States :
**DE FR IT**

(71) Applicant : **GEC-Marconi Limited**
**The Grove Warren Lane**
**Stanmore Middlesex HA7 4LY (GB)**

(72) Inventor : **Smith, Peter**
**4 Hazel Road**
**Clanfield, Hampshire, P08 0LF (GB)**

(74) Representative : **Waters, Jeffrey et al**
**GEC Patent Department, GEC Marconi**
**Limited, West Hanningfield Road**
**Great Baddow, Chelmsford, Essex CM2 8HN**
**(GB)**

(54) **Thrust vector control unit for an iron thruster.**

(57)    An ion thruster employing an electrostatic field e.g. between a cathode 2 and an anode 4, in a discharge chamber 1, to accelerate positively charged propellant ions through a screen grid 6′ to and through an accelerator grid 6, employs relative movement of the grids to vary the direction of the ion beam leaving the accelerator grid and hence the reactive thrust on the grid and hence the thruster. This provides a simple means for control of the thrust vector of the thruster.

EP 0 468 706 A2

The present invention concerns control systems for ion thrusters. Ion thrusters are known devices which produce thrust for spacecraft by ionising a propellant and accelerating the ions so produced to a high velocity by a number of electrically charged grids.

Currently used ion thruster systems suffer from an inability to accurately measure the direction of the thrust vector. As a result a disturbance torque may be induced on the spacecraft which is difficult to eliminate. For some operations the use of a gimbal mechanism to physically move the thruster is proposed. This mechanism is seen as a significant disadvantage to the introduction and commercialisation of ion propulsion because of the added weight, complexity and expense.

In accordance with the present invention there is provided an ion thruster comprising means for ionising a propellant, a screen grid, an accelerator grid for accelerating propellant ions passing through the screen grid, wherein means is provided for generating controlled relative movement between the screen grid and the accelerator grid of the thruster thereby to provide control of the thrust vector of the thruster.

Relative movement between the screen grid and the accelerator grid alters the direction of the ion beam emerging from the accelerator grid and hence the direction of the reaction force on the thruster.

The accelerator grid and/or the screen grid may be movable in the general direction in which the grids extend.

In order that the present invention may be more readily understood, an embodiment thereof will now be described by way of example and with reference to the accompanying drawings, in which:

Figure 1 is a section through an ion thruster;
Figure 2 is a block diagram showing how operation of the thruster of Figure 1 is controlled, and Figures 3 and 4 are diagrammatic views of the grids of an ion thruster of the type shown in Figures 1 and 2 illustrating the concept of the present invention.

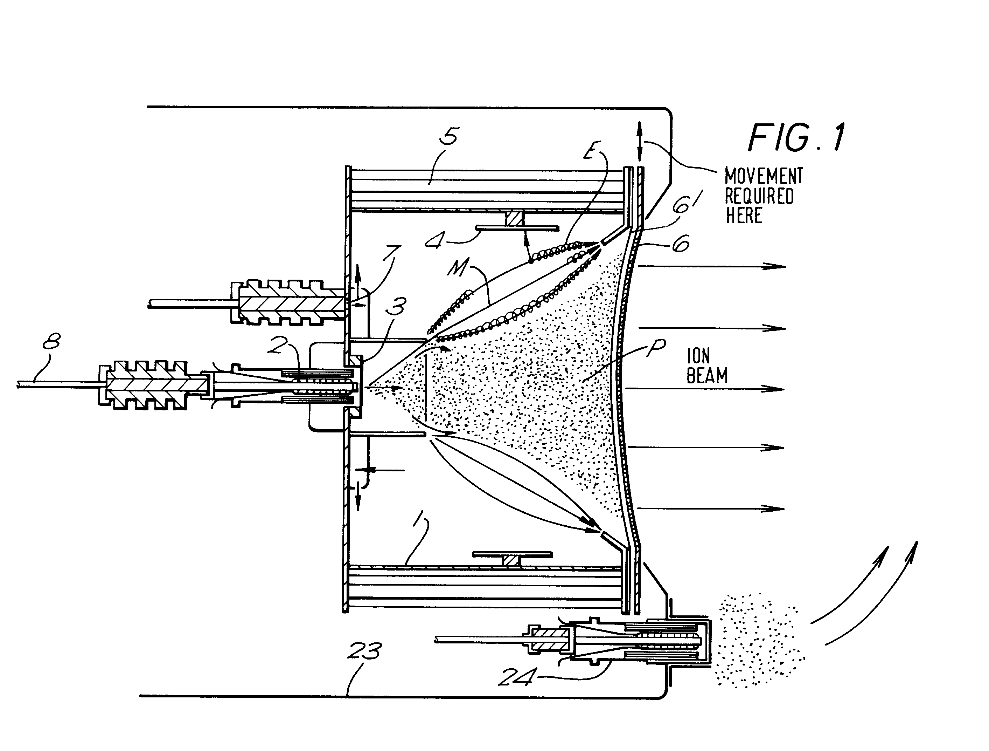

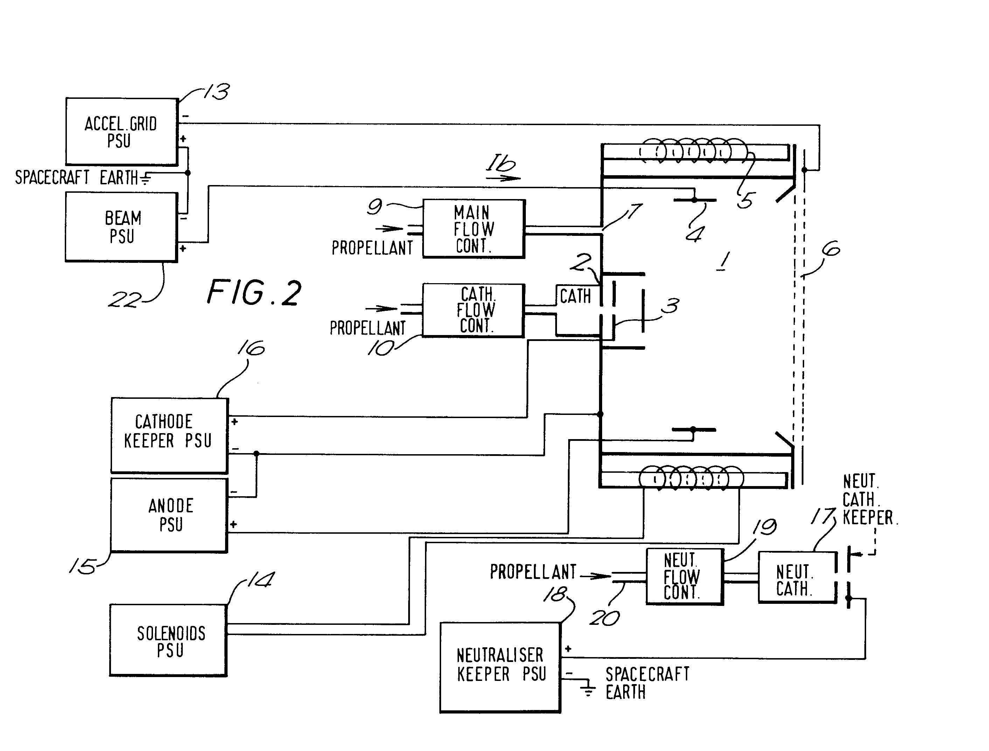

Referring now to Figures 1 and 2 of the drawings these show an ion thruster comprising a discharge chamber 1 housing a hollow cathode 2, a cathode keeper 3 and an annular anode 4. The plasma generated in the discharge chamber is designated P. The chamber 1 also includes solenoid coils 5 for generating a magnetic field (field lines shown as M) for increasing the paths of electrons by a cyclotron effect (the spiral path E) between cathode and anode in order to increase the probability of ionisation. The chamber also includes an accelerator 6 grid for providing the final acceleration to the ionised propellant. Associated with the accelerator grid 6 is a screen grid 6'.

The discharge chamber also has a main propellant inlet 7 and an inlet 8 for leading propellant to the cathode 2.

Propellant fed into the hollow cathode 2 is ionised by the arc which strikes between the cathode and the cathode keeper which is more positive than the cathode. Propellant fed into main inlet 7 is ionised by collision with the electrons created in the arc attracted towards the anode along their spiralling path. The screen grid 6' is at the same potential as that of the interior of the discharge chamber, and ions are not accelerated towards it but simply drift towards it. Those in the close vicinity of the screen grid 6' are accelerated towards and through the accelerator grid 6, which is highly negative compared to the screen grid, creating an ion beam through the accelerator grid. A reactive thrust is thus applied to the accelerator grid and hence the thruster. To prevent the ions being attracted back to the highly negative accelerator grid 6, a cloud of electrons is generated by neutraliser 24 in which propellant is supplied, to neutralise the ion beam. If desired, a further grid at the same spacecraft earth potential as screen 23 could surround the accelerator grid 6, in order to prevent any non-ionised propellant atoms or molecules which may pass through the accelerator grid and may be ionised outside the thruster through collision with the ion beam through a process of charge exchange, from being accelerated towards the accelerator grid, since such ions could thereby damage the accelerator grid 6.

Associated with the propellant inlets are control valves 9 and 10.

The accelerator grid 6 has an associated accelerator grid power supply unit 13, the solenoid coils 5 a power supply unit 14, the annular anode 4 an anode power supply unit 15, and the cathode keeper 3 a power supply unit 16.

It can be seen that the beam power supply 22 is connected to spacecraft earth, and the beam power supply unit 22 is earthed with respect to the body of the thruster. The anode supply 15, and cathode keeper supply 3, are referenced to the beam supply 22.

Finally the ion thruster includes a neutraliser cathode 17 having a neutraliser keeper power supply 18, and a neutraliser flow control valve 19 in a propellant line 20. All the power supply units described are D.C.

The ion thruster comprising these various integers is known as a Kaufman-type ion engine or thruster and as can be seen has six separate power supply units and three propellant feeds, these being the main propellant feed 7, the cathode propellant feed 8 and the neutraliser propellant feed 20.

Typical voltages relative to spacecraft earth of the various electrodes etc are: beam power supply unit 2, cathode, discharge chamber and screen 6', +1100 volts; cathode keeper, +12 volts, electromagnet 5, +12 volts, anode 4, +40 volts, and accelerator grid -350 volts.

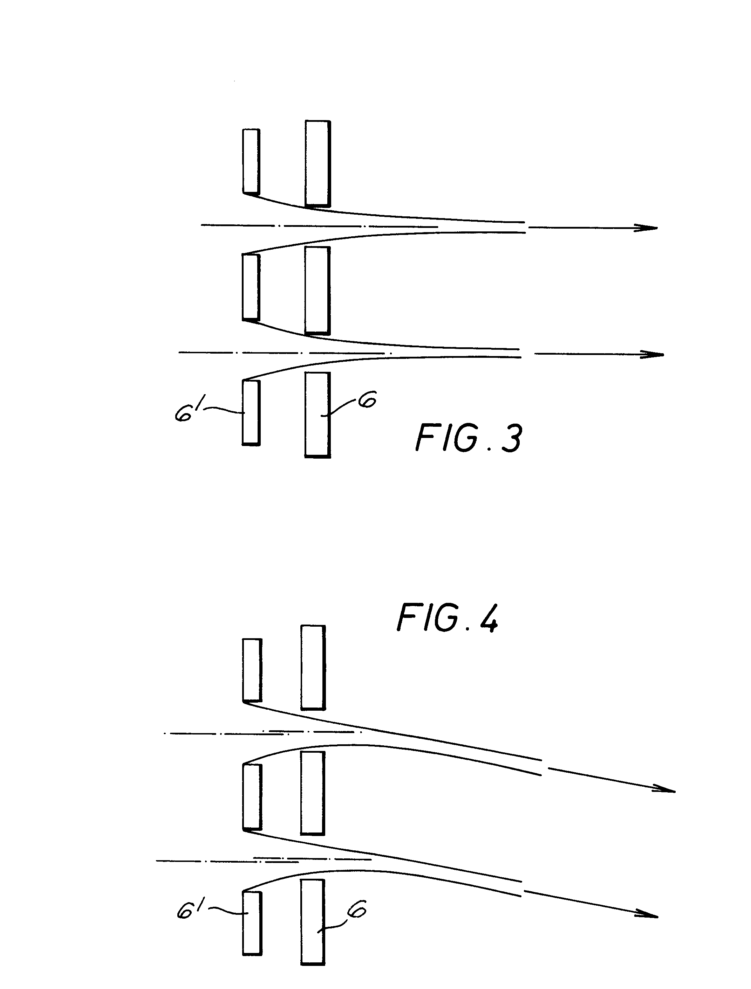

Figure 3 shows an enlarged and simplified view of the passage of ionised propellant from the thruster. Thus ions generated in the discharge chamber flow through the screen grid 6′ and are accelerated by the potential difference between the screen grid 6′ and the accelerator grid 6 giving a beam B with a thrust vector V. The holes in the two grids 6 and 6′ are machined to produce the required thrust beam without inducing impingement of the ions on the accelerator grid 6.

Figure 4 shows the situation where a small relative movement has been imparted to the grids 6 and 6′. This movement produces a deflection of the ions as they pass through the grid holes. Thus by purposely producing relative lateral movement between grids 6 and 6′ the ions can be deflected from their original course onto a new course, and in so doing create a reaction on the grid caused by momentum exchange which is manifested as a change to the direction of the thrust vector. Accordingly by carefully designing the control and actuation mechanism it is possible to provide control of the thrust vector V.

Various mechanisms to generate grid movement may be used, such as heated or cooled elements the expansion and contraction of which will cause grid movement; mechanical or worm drives associated with motors; or piezo electric crystal actuators.

This technique for thrust vector control is also applicable to 3 or more grid thrusters.

In the embodiment just described the dished section of the grid 6 is approximately 10cm in diameter and the holes, of which there are approximately 1500, are about 2mm in diameter. However the technique could be applied to other sizes of grids and holes.

Variations may of course be made to the embodiment described without departing from the scope of the invention. Thus, the invention is not restricted to ion thrusters of the Kaufman (or electron bombardment ion thruster) type, but is applicable to any ion thruster employing an electrostatic field to accelerate positively charged ions using a screen grid and an accelerator grid. Thus, the invention is also applicable to the type of ion thruster in which the electromagnets 5 of the Kaufman type are replaced by permanent magnets. The electron path from the cathode to a boundary anode is extended by the use of an array of magnetic pole strips, adjacent poles being of opposite polarity, provided at the discharge chamber walls adjacent the boundary anode, in order to reflect a large fraction of the ions and electrons approaching it.

Equally, the invention is applicable to the type of ion thruster in which the discharge chamber with electrons is replaced by an electrodeless r.f. discharge chamber, e.g. formed by an annular quartz cylinder.

Also, instead of employing a gaseous propellant (although it may be stored in liquid from) e.g. Xenon Argon or Krypton, solids or liquids such as Caesium or Mercury which are vapourised when heated may be employed.

## Claims

1. An ion thruster comprising means for ionising a propellant, a screen grid, an accelerator grid for accelerating propellant ions passing through the screen grid, wherein means is provided for generating controlled relative movement between the screen grid and the accelerator grid of the thruster thereby to provide control of the thrust vector of the thruster.

2. An ion thruster as claimed in claim 1, in which the means for generating relative movement includes an element subject to thermal expansion or contraction.

3. An ion thruster as claimed in claim 1, in which the means for generating relative movement includes a motor.

4. An ion thruster as claimed in claim 1, in which the means for generating relative movement includes a piezo-electric actuator.

5. An ion thruster as claimed in any one of claims 1 to 4, in which the ionisation means includes an anode and a cathode, in order to produce propellant ions by collision with electrons.

6. An ion thruster as claimed in claim 5, including electromagnetic means for generating a magnetic field to increase the electron path between cathode and anode by a cyclotron effect.

7. An ion thruster as claimed in claim 5, including permanent magnets for generating a magnetic field to increase the electron path by reflection of electrons approaching the anode.

8. An ion thruster as claimed in any one of claims 1 to 4, in which the ionisation means includes an r.f. discharge chamber.

9. A spacecraft including an ion thruster as claimed in any one of claims 1 to 8.

FIG. 1

MOVEMENT REQUIRED HERE

ION BEAM

P

5

7

3

2

8

4

M

6'

6

23

24

FIG.2

FIG.3

FIG.4